# EUROPÄISCHE PATENTSCHRIFT

(11) **EP 4 470 814 B1**
(45) Veröffentlichungstag und Bekanntmachung des Hinweises auf die Patenterteilung: **09.09.2026**
(21) Anmeldenummer: 24177183.1
(22) Anmeldetag: 21.05.2024
(51) Int. Cl.: B60K 6/485, B60W 10/06, B60W 10/08, B60W 20/11, B60W 20/16, B60W 20/40, B60W 30/192, B60K 6/48, B60W 30/18, B60W 50/00

(54) **VERFAHREN ZUR VORZEITIGEN VERBRENNUNGSMOTORISCHEN ABSCHALTUNG EINES HYBRID-ELEKTROFAHRZEUGES IN EINEM NEGATIVEN LASTWECHSELFALL**
METHOD FOR PREMATURE COMBUSTION ENGINE SHUTDOWN OF A HYBRID ELECTRIC VEHICLE IN A NEGATIVE LOAD CHANGE MODE
PROCÉDÉ DE DÉSACTIVATION PRÉMATURÉE D'UN MOTEUR À COMBUSTION INTERNE D'UN VÉHICULE ÉLECTRIQUE HYBRIDE EN CAS DE VARIATION DE CHARGE NÉGATIVE

(30) Priorität: 30.05.2023 DE 102023205043
(43) Veröffentlichungstag der Anmeldung: 04.12.2024
(73) Patentinhaber: VOLKSWAGEN AG, 38440 Wolfsburg (DE)
(72) Erfinder: Schemann, Stephan, 38440 Wolfsburg (DE); Thaler, Tim, 30161 Hannover (DE)

(56) Entgegenhaltungen:
- DE-A1- 102015 113 383
- US-A1- 2010 042 279
- US-B2- 9 321 455

## Beschreibung

Die Erfindung betrifft ein Verfahren zur vorzeitigen verbrennungsmotorischen Abschaltung eines Hybrid-Elektrofahrzeuges in einem negativen Lastwechselfall.

In einem Hybrid-Elektrofahrzeug (HEV, englisch: Hybrid Electric Vehicle) wird durch eine interne Verbrennungskraftmaschine (abgekürzt: VKM), nachfolgend auch kurz als Verbrennungsmotor bezeichnet, und einen Elektromotor (abgekürzt: EM) entweder einzeln oder gemeinsam Energie zu den Rädern des Fahrzeuges übertragen.

Ein Plug-in-Hybrid-Elektrofahrzeug (PHEV, englisch: Plug-in Hybrid Electric Vehicle) ist ebenfalls ein Hybrid-Elektrofahrzeug mit dem Unterschied, dass der Akkumulator des Kraftfahrzeuges sowohl durch den Verbrennungsmotor als auch mit einem Stecker am Stromnetz geladen werden kann. Ein Plug-in-Hybridfahrzeug (PHEV) besteht somit aus einem Elektromotor, einem Verbrennungsmotor, einer Batterie und einem Ladegerät, mit dem der Akkumulator des Kraftfahrzeuges am Stromnetz geladen werden kann.

Ein Mild-Hybrid-Elektrofahrzeug (MHEV, englisch: Mild Hybrid Electric Vehicle) ist ein Kraftfahrzeug, dessen konventioneller Antriebsstrang mit dem Verbrennungsmotor durch einen Elektromotor und eine zusätzliche Batterie ergänzt wird. Das Kraftfahrzeug umfasst somit den Verbrennungsmotor und als Elektromotor einen zusätzlichen reversiblen Generator. Dieser Elektromotor wird anstelle einer herkömmlichen Lichtmaschine eingesetzt und unterstützt den Verbrennungsmotor in bestimmten Fahrmodi, wie Anfahren, Konstantfahrt oder Beschleunigen. Ein MHEV-Kraftfahrzeug kann nicht rein elektrisch betrieben werden, es braucht immer einen Verbrennungsmotor, um angetrieben zu werden.

Der Elektromotor beim Mild-Hybrid-Kraftfahrzeug ist nur über einen Riementrieb mit der Antriebskette verbunden und fungiert als sogenannter Startgenerator, wobei ein MHEV wie ein PHEV aufgebaut sein kann, jedoch nur über die Fahreigenschaften eines MHEV verfügt.

Außerdem kann der Startgenerator den Verbrennungsmotor während der Fahrt abschalten und wieder anlassen, was mit einem herkömmlichen Anlasser technisch nicht denkbar wäre. Die meisten MHEV-Elektrofahrzeuge nutzen auch die Boost-Funktion (volle Beschleunigung) und können bei Bedarf über den Elektromotor zusätzliche Leistung in das System einspeisen.

Gegenüber der konventionellen Antriebstechnologie bietet ein hybridisierter Antriebsstrang zwei Arten des lastfreien verbrennungsmotorischen Betriebs. Die Deaktivierung des Verbrennungsmotors kann bei einem offenen oder geschlossenen Antriebsstrang erfolgen.

Bei einem offenen Antriebsstrang kann der Verbrennungsmotor gänzlich abgestellt werden und das Kraftfahrzeug geht in das dem Fachmann bekannte sogenannte "Segeln" über, da der Elektromotor einen ansatzlosen Wiederstart des Verbrennungsmotors gewährleistet.

Bei geschlossenem Antriebsstrang geht der Verbrennungsmotor, wie bei der konventionellen Antriebsstrategie, in das dem Fachmann bekannte sogenannte "Schubabschalten" über.

Im Unterschied zu den Mild-Hybrid-Elektrofahrzeugen können Hybrid-Elektrofahrzeuge und Plug-in-Hybrid-Elektrofahrzeuge rein elektrisch betrieben werden. Der den Hybrid-Elektrofahrzeugen zugeordnete Verbrennungsmotor kann ein Diesel- oder ein Otto-Motor sein.

Die Druckschrift DE 10 2018 205 238 A1 betrifft ein Verfahren zum Durchführen eines Umschaltvorgangs in einem Hybridfahrzeug mit einer Verbrennungskraftmaschine und einer elektrischen Antriebsmaschine, wobei der Umschaltvorgang ein Umschalten von einer ersten Betriebsart der Verbrennungskraftmaschine in eine zweite Betriebsart der Verbrennungskraftmaschine und ein Umschalten von der zweiten Betriebsart in die erste Betriebsart enthält. Es ist vorgesehen, dass in der ersten Betriebsart alle Zylinder einen Momentenbeitrag der Verbrennungskraftmaschine liefern. In der zweiten Betriebsart ist vorgesehen, dass ein Teil der Zylinder abgeschaltet wird, der oder die dann keinen Momentenbeitrag mehr leistet/leisten.

Die Druckschrift DE 10 2007 047 589 A1 beschreibt ein Verfahren und eine Steuerung zum Deaktivieren des Verbrennungsmotors eines Parallel-Hybridantriebs, der den Verbrennungsmotor, einen Elektromotor und eine steuerbare Trennkupplung umfasst, die den Verbrennungsmotor mit dem Elektromotor verbindet. Das Verfahren umfasst die Schritte: Erfassen eines Abkopplungssignals und, bei Erfassen des Abkopplungssignals, Ändern der Drehzahlsteuerung durch Blockieren der Steuerung der Verbrennungsmotor-Drehzahl abhängig von einem Fahrerwunsch und Ansteuern des Verbrennungsmotors auf eine Drehzahl, die zu einem Momentenübertrag vom Verbrennungsmotor auf die Kupplung von im Wesentlichen Null entspricht. Nachdem die Steuerung der Verbrennungsmotor-Drehzahl abhängig von einem Fahrerwunsch blockiert wurde, wird die Trennkupplung geöffnet.

Ein System und Verfahren für die Kontrolle einer Hybridfahrzeug-Kraftübertragung mit einem Verbrennungsmotor, einem Generator und einem Elektromotor, die über einen Planetenradsatz verbunden sind, um eine Sperre im Planetenradsatz zu erkennen und die Kraftübertragung als Reaktion zu kontrollieren, geht aus der Druckschrift DE 10 2011 083 829 A1 hervor. Wenn ein Drehmoment in einem elektrischen Betriebsmodus bei deaktiviertem Verbrennungsmotor übertragen wird, wird der Generator bei mindestens einer Differenz zwischen tatsächlicher Generatordrehzahl und erwarteter Generatordrehzahl, die einen Schwellenwert übersteigt, was auf eine Sperre im Planetenradsatz hinweist, deaktiviert. Wenn der Verbrennungsmotor aktiviert ist und ein Drehmoment über die Kraftübertragung überträgt, werden der Verbrennungsmotor und der Generator bei mindestens einer Differenz zwischen Motorbeschleunigung und erwarteter Motorbeschleunigung, die einen ersten Schwellenwert übersteigt, und einer Differenz zwischen Motordrehzahl und Hohlraddrehzahl, die niedriger als ein zweiter Schwellenwert ist, deaktiviert.

Wie erläutert, wird der Verbrennungsmotor in bestimmten Betriebspunkten abgeschaltet. Wie oben erläutert, wird der Verbrennungsmotor im offenen Antriebsstrang abgestellt (= "Segeln des Verbrennungsmotors"), während der Verbrennungsmotor im geschlossenen Antriebsstrang über die Räder des Kraftfahrzeuges mitgeschleppt (= "Schubabschalten des Verbrennungsmotors") wird.

Aus verschiedenen Gründen kommt es bei einem sofortigen kompletten Abschalten der Einspritzung in die Zylinder des Verbrennungsmotors mit geschlossenem Antriebsstrang, das heißt bei starken Regeländerungen hinsichtlich des zur Verfügung stehenden Momentes oder der Momentenerzeugung des Verbrennungsmotors, zu einem unangenehmen Fahrverhalten, das sich in dem sogenannten "Ruckeln" äußert.

Das heißt, die Fahrbarkeit von herkömmlichen Kraftfahrzeugen und somit auch Hybrid-Elektrofahrzeugen wird negativ beeinflusst, so dass ein sogenannter harmonischer Momentenabbau vorgenommen wird, bei dem das von dem Verbrennungsmotor zur Verfügung gestellte Drehmoment (VKM-Moment) gefiltert abgebaut wird. Diese Vorgehensweise kennt der Fachmann als "auslaufendes" Drehmoment des Verbrennungsmotors.

Hinzu kommt, dass auch die Quantitätsregelung eines Verbrennungsmotors aufgrund der Trägheit der Luft, die den Brennkammern des Verbrennungsmotors zugeführt wird, hinsichtlich eines abrupten Momentenabbaus verzögernd wirkt. Mit anderen Worten, beide Einflüsse können einen längeren Betrieb des Verbrennungsmotors von bis zu zwei Sekunden bedeuten.

Um den dadurch entstehenden CO₂-Nachteil durch den längeren Betrieb des Verbrennungsmotors, das heißt dem verzögerten gefilterten Abbau des zur Verfügung gestellten Momentes des Verbrennungsmotors, zu verringern, wird ein Verfahren gesucht, bei dem der Verbrennungsmotor möglichst früh abgeschaltet werden kann, wobei die Fahrbarkeit des jeweiligen Hybrid-Elektrofahrzeuges nicht negativ beeinflusst werden soll.

Aus der US 2010/042279 A1 ist ein Steuerverfahren für ein Hybridtriebwerk bekannt. Das Steuerverfahren umfasst das Empfangen eines Vorübergangssignals und das selektive Einstellen eines Verbrennungsdrehmomentes eines Motors des Triebwerks zwischen einem ersten Drehmomentwert und einem zweiten Drehmomentwert vor einer Deaktivierungsübergangsperiode basierend auf dem Vorübergangssignal, wobei der zweite Drehmomentwert kleiner ist als der erste Drehmomentwert. Das Verfahren umfasst ferner das selektive Anpassen eines elektrischen Antriebsdrehmoments einer elektrischen Maschine des Triebwerks vor der Deaktivierungsübergangsperiode basierend auf dem Vorübergangssignal und Verbrennungsmoment. Das selektive Anpassen des elektrischen Antriebsmoments umfasst das Anpassen des elektrischen Antriebsdrehmoments, sodass eine Summe aus dem Verbrennungsdrehmoment und dem elektrischen Antriebsdrehmoment einem gewünschten Antriebsdrehmoment des Triebwerks während einer Vorübergangsperiode vor der Deaktivierungsübergangsperiode entspricht.

Aus der DE 10 2015 113 383 A1 ist ein Verfahren zum Steuern eines Fahrzeugs mit einem Hybridantriebsstrang bekannt, der eine Kraftmaschine mit einer drehbaren Kurbelwelle, eine Antriebsache, die mit der Kurbelwelle wirksam verbunden ist und von dieser angetrieben wird, und einen Elektromotor/Generator, der mit der Kurbelwelle wirksam verbunden ist, aufweist. Das Verfahren umfasst, dass mithilfe eines elektronischen Controllers ein Kraftmaschinendrehmoment in eine erste Drehrichtung und ein Bremsdrehmoment in eine entgegengesetzte zweite Drehrichtung überwacht werden. Weiter wird mithilfe des Controllers eine Fahrzeuggeschwindigkeit überwacht, wobei mithilfe des Controllers der Motor/Generator gesteuert wird, um eine Drehung der Kurbelwelle zu stoppen, wenn die Fahrzeuggeschwindigkeit von Null verschieden ist, falls ein prozentualer Anteil des Bremsdrehmoments größer als ein vorbestimmter prozentualer Anteil des Bremsdrehmoments ist und die Fahrzeugverzögerungsrate größer als ein vorbestimmter Fahrzeugverzögerungsraten-Schwellwert ist, wobei der prozentuale Anteil des Bremsdrehmoments auf dem überwachten Bremsdrehmoment und dem überwachten Kraftfaschinendrehmoment beruht.

Aus der US 9,321,455 B2 ist ein System und ein Verfahren zum Öffnen einer Motorkupplung eines Hybridfahrzeugs bekannt, die die Kraftstoffeffizienz verbessern, indem diese ein Eingangsdrehmoment einer Motorkupplung durch Anlegen eines Drehmoments eines Hybridstartergenerators auf Null einstellen, der mit dem Motor verbunden ist, während diese die Einspritzzeit des Kraftstoffs in den Motor ab dem Zeitpunkt reduzieren, an dem die Öffnung der Motorkupplung mit der Einstellung beginnt.

Das gesuchte Verfahren soll nach einer steuerungsseitigen Anforderung, das Drehmoment des Hybrid-Elektrofahrzeuges abzubauen, gewährleisten, dass der Verbrennungsmotor möglichst früh abgeschaltet wird, wobei das zeitlich schnellere Abschalten der Einspritzung des Verbrennungsmotors derart vorgenommen wird, dass das zuvor erläuterte "Ruckeln" trotz des zeitlich früheren Abschaltens der Einspritzung in die Zylinder des Verbrennungsmotors nicht stattfindet, worin die Aufgabe der Erfindung besteht.

Es ist somit die Aufgabe der Erfindung, eine Motorsteuerung für ein Hybrid-Elektrofahrzeug und ein zugehöriges Verfahren vorzuschlagen, mittels der beziehungsweise bei dem das Ausschalten der Einspritzung in die Zylinder eines Verbrennungsmotors derart vorgenommen werden kann, dass ein harmonischer Momentenabbau stattfindet, wobei die Einspritzung in die Zylinder des Verbrennungsmotors nach einer vorgebbaren Vorgehensweise beendet wird, um Kraftstoff und somit mit der Verbrennung einhergehende Emissionen zu reduzieren.

Zur Lösung der Aufgabe ist ein Verfahren zur verbrennungsmotorischen Abschaltung einer Verbrennungskraftmaschine eines Hybrid-Elektrofahrzeuges in einem negativen Lastwechselfall vorgesehen, bei dem zu einem Startzeitpunkt des Lastwechsels, in dem die Verbrennungskraftmaschine des Hybrid-Elektrofahrzeuges ein Drehmoment erzeugt, eine steuerungsseitige Anforderung zum Abbauen des Drehmomentes des Hybrid-Elektrofahrzeuges empfangen wird, wobei die Anforderung eine vorgegebene Kennlinie beinhaltet, nach der das Drehmoment des Hybrid-Elektrofahrzeuges über der Zeit in einem sich an den Startzeitpunkt anschließenden Verzögerungszeitraum bis spätestens zu einem Endzeitpunkt des negativen Lastwechsels gemäß der Kennlinie abgebaut wird.

Erfindungsgemäß ist vorgesehen, dass die vorgegebene Kennlinie in dem Verzögerungszeitraum durch eine den Kennlinienverlauf der vorgegebenen Kennlinie abbildende kompensatorische Kennlinie des Hybrid-Elektrofahrzeuges nachgebildet wird, wobei das Hybrid-Elektrofahrzeug nach dieser kompensatorischen Kennlinie in vorteilhafter Weise derart betrieben wird, dass das Drehmoment der Verbrennungskraftmaschine ab einem Startzeitpunkt eines zeitlich innerhalb des Verzögerungszeitraumes liegenden Überlagerungszeitraumes durch ein verfügbares Drehmoment des Elektromotors in Abhängigkeit eines Momenten-Gradienten, der die Änderungsgeschwindigkeit des von dem Elektromotor zur Verfügung gestellten Betrages des Drehmomentes über der Zeit angibt, zumindest teilweise oder vollständig kompensiert wird, wobei das Drehmoment der Verbrennungskraftmaschine während des Überlagerungszeitraums auf Null geht.

Bevorzugte alternative Vorgehensweisen sind in den Unteransprüchen formuliert.

Die Erfindung betrifft auch ein Hybrid-Elektrofahrzeug, welches eingerichtet ist, das erfindungsgemäße Verfahren auszuführen. Das Hybrid-Elektrofahrzeug umfasst mindestens ein Motor-Steuergerät, in dem ein computerlesbarer Programmalgorithmus zur Ausführung des Verfahrens und gegebenenfalls erforderliche Kennfelder gespeichert sind.

In Bezug auf die nachfolgende Erläuterung der Erfindung und die Formulierung der Ansprüche geht es darum, einen Lastwechsel, insbesondere einen negativen Lastwechsel, zu beschreiben beziehungsweise zu beanspruchen. In der Beschreibung und den Ansprüchen wird für eine wechselnde Motorlast als beschreibender Parameter stets das Moment beziehungsweise das Drehmoment der Verbrennungskraftmaschine benutzt, da das Moment der Verbrennungskraftmaschine in Bezug auf das Moment des zu dem Hybrid-Elektrofahrzeug gehörenden Elektromotors als vergleichende Bezugsgröße am geeignetsten ist. Insbesondere bei Verbrennungskraftmaschinen (Verbrennungsmotoren) bestehen prinzipiell auch andere Möglichkeiten, eine Motorlast zu beschreiben beziehungsweise zu beanspruchen, wobei insbesondere Parameter wie Leistung, Frischluftfüllung, Luftmasse beziehungsweise Luftmassenstrom oder Saugrohrdruck als beschreibende beziehungsweise beanspruchbare Parameter gewählt werden können. Insofern wird das Moment der Verbrennungskraftmaschine als ein zu Leistung, Frischluftfüllung, Luftmasse beziehungsweise Luftmassenstrom äquivalenter Parameter angesehen, der/die ebenfalls zur Verdeutlichung einer Motorlast der Verbrennungskraftmaschine herangezogen werden kann/können und zwar ohne, dass sich die Grundidee des erfindungsgemäßen Verfahrens ändert.

Die Erfindung wird anhand der zugehörigen Figuren erläutert. Es zeigen:
- Figur 1: eine Kennlinie K*_{VKM} eines Drehmomentes einer herkömmlichen Verbrennungskraftmaschine über der Zeit t nach dem Stand der Technik;
- Figur 2: eine Kennlinie K_{VKM} des Drehmomentes einer Verbrennungskraftmaschine eines Hybrid-Elektrofahrzeuges über der Zeit t, deren Verlauf sich ab einem Startzeitpunkt t_{LW-S} von der Kennlinie K*_{VKM} des Drehmomentes der Verbrennungskraftmaschine über der Zeit t nach Figur 1 unterscheidet;
- Figur 3: eine Kennlinie K_{EM} des motorischen Drehmomentes des Elektromotors des Hybrid-Elektrofahrzeuges über der Zeit t;
- Figur 4: eine Kennlinie K_{VKM}/K_{VKM/EM}/K_{EM} des Drehmomentes des Hybrid-Elektrofahrzeuges, die ab dem Startzeitpunkt t_{LW-S} in einem Verzögerungszeitraum Δt_{V} einen Kompensationszeitraum Δt_{K} umfasst, in dem ein Überlagerungszeitraum Δt_{Ü} ausgebildet ist.

Ein nicht näher dargestelltes Hybrid-Elektrofahrzeug umfasst eine Antriebseinheit. Die Antriebseinheit umfasst eine Verbrennungskraftmaschine, nachfolgend Verbrennungsmotor genannt, in Form eines Ottomotors oder Dieselmotors mit einer zylinderweisen Einspritzausblendung und einen Elektromotor.

Der Elektromotor als elektrische Antriebsmaschine kann direkt oder mittelbar mit dem Verbrennungsmotor wirkverbunden sein, zum Beispiel mittelbar (indirekt) mittels einer als Riemen ausgeführten Übersetzungsstufe im Fall von Fahrzeugen mit Riemen-Starter-Generator oder direkt auf die Kurbelwelle der Verbrennungskraftmaschine wirkend im Fall von Fahrzeugen mit Kurbelwellen-Starter-Generator oder auch mittelbar (indirekt) über eine Kupplung, insbesondere eine Trennkupplung. Der Verbrennungsmotor und der Elektromotor sind in bekannter Weise über eine Antriebsachse mit Rädern des Hybrid-Elektrofahrzeuges gekoppelt.

Zum Steuern des Verbrennungsmotors und des Elektromotors umfasst die Antriebseinheit weiterhin eine Motorsteuerung, die über elektrische Leitungen mit Komponenten des Verbrennungsmotors und des Elektromotors verbunden ist.

Innerhalb der Motorsteuerung wird als Teil der Motorsteuerung in einem Motorsteuergerät auf ein Applikationsprogramm zurückgegriffen, das die Verwendung des Elektromotors und des Verbrennungsmotors im Hybrid-Elektrofahrzeug optimiert, um eine effiziente Leistung und eine größere Reichweite bei optimiertem geringen Verbrauch von Kraftstoff im Verbrennungsmotor und von in der Batterie gespeicherter elektrischer Energie durch den Elektromotor zu erzielen. Eine Abnahme des durch den Verbrennungsmotor zur Verfügung gestellten Drehmoments kann durch das motorische Drehmoment des Elektromotors kompensiert werden.

Wie bereits vorne erläutert, wird der Verbrennungsmotor nach der Anforderung durch die Motorsteuerung in den jeweils vorliegenden Betriebspunkten harmonisch und nicht abrupt abgeschaltet, so dass es zu einer zeitlichen harmonischen Verringerung des durch den Verbrennungsmotor zur Verfügung gestellten Drehmoments kommt.

Wie ebenfalls bereits erläutert, wird das sofortige komplette Abschalten der Einspritzung des Verbrennungsmotors, das innerhalb der Motorsteuerung starke Regeländerungen bewirkt, vermieden, da es ansonsten hinsichtlich des abrupt nicht mehr zur Verfügung stehenden Drehmomentes des Verbrennungsmotors zu dem unangenehmen Fahrverhalten ("Ruckeln") des Kraftfahrzeuges, insbesondere des Hybrid-Elektrofahrzeuges, kommt.

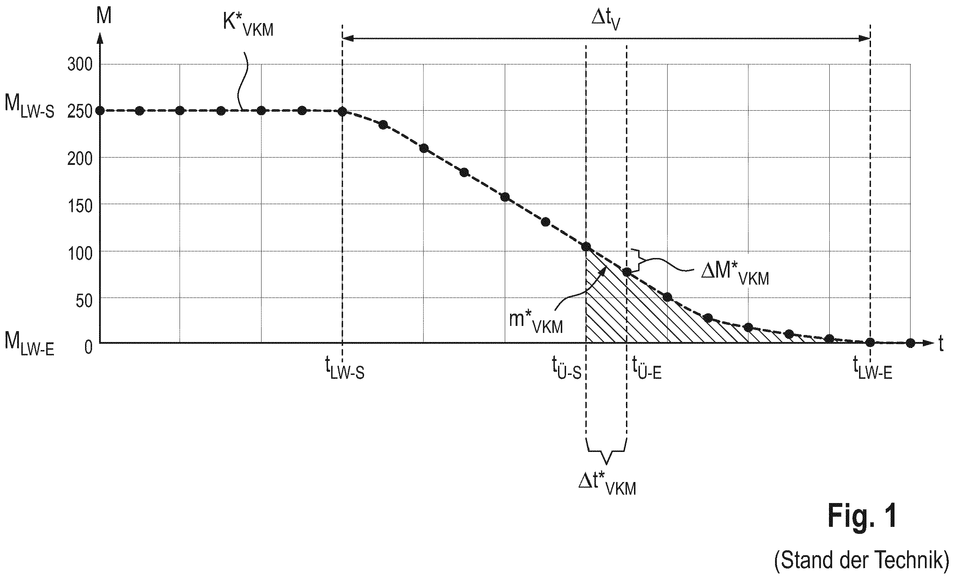

Damit der erwünschte Momentenabbau des Hybrid-Elektrofahrzeuges insgesamt in den Betriebspunkten, in denen der Verbrennungsmotor abgeschaltet werden soll, harmonisch bewirkt wird, ist in der herkömmlichen Verfahrensweise vorgesehen, dass kein abruptes komplettes Abschalten der Einspritzung in die Zylinder des Verbrennungsmotors erfolgt, sondern wie in Figur 1 dargestellt vorgegangen wird, wie nachfolgend erläutert ist.

Die Figur 1 zeigt eine Kennlinie K*_{VKM} des Drehmomentes M der Verbrennungskraftmaschine eines herkömmlichen Kraftfahrzeuges über der Zeit t nach dem Stand der Technik.

Die Kennlinie K*_{VKM} zeigt in einem beispielhaften Betriebspunkt M_{LW-S}/t_{LW-S}, dass zu einem Startzeitpunkt t_{LW-S} ein negativer Lastwechsel stattfindet. In diesem beispielhaften Betriebspunkt M_{LW-S}/t_{LW-S} wird von dem Verbrennungsmotor zu dem Startzeitpunkt t_{LW-S} beispielsweise ein Drehmoment M_{LW-S} geliefert.

Ein negativer Lastwechsel wird dadurch hervorgerufen werden, dass in dem Betriebspunkt in der Motorsteuerung durch den Fahrer ein Fahrerwunsch durch Freigabe des Fahrpedals erfolgt, so dass in bekannter Weise durch den Verbrennungsmotor ein niedrigeres Drehmoment zur Verfügung gestellt wird und schließlich zu einem Endzeitpunkt t_{LW-E} des Lastwechsels ein komplettes Abschalten der Einspritzung in die Zylinder des Verbrennungsmotors erfolgt. Zu dem Endzeitpunkt t_{LW-E} des Lastwechsels ist das Drehmoment M_{LW-E} des Verbrennungsmotors = 0.

Das zu dem Startzeitpunkt t_{LW-S} durch den Verbrennungsmotor zur Verfügung gestellte Drehmoment M_{LW-S} wird zu dem Startzeitpunkt t_{LW-S} als "auslaufendes" Drehmoment in einem harmonischen Verzögerungszeitraum Δt_{V} (t_{LW-E} - t_{LW-S}) abgebaut, indem innerhalb der Motorsteuerung dafür gesorgt wird, dass es nicht zu starken Regeländerungen kommt. Der harmonische Verzögerungszeitraum Δt_{V} (T_{LW-E} - T_{LW-S}) des Verbrennungsmotors beträgt in der herkömmlichen Verfahrensweise beispielsweise bis zu 2 Sekunden.

Die bei einem Lastwechsel einzustellende Kennlinie K*_{VKM} des in dem Verzögerungszeitraum Δt_{V} "auslaufenden" Drehmomentes des Verbrennungsmotors des herkömmlichen Kraftfahrzeuges wird betriebspunktabhängig in der Motorsteuerung abgelegt und liefert innerhalb des Verfahrens zu jedem Zeitpunkt den einzustellenden Betrag des im Verzögerungszeitraum Δt_{V} einzustellenden gewünschten Drehmomentes des Verbrennungsmotors.

Es ist vorgesehen, das "auslaufende" Drehmoment in vorgebbaren Vorgehensweisen entweder durch sogenannte "weiche" Maßnahmen vorzunehmen, wie eine Zündwinkelverstellung und/oder Veränderung der Füllung der Zylinder mit Verbrennungsluft und/oder Kraftstoff und/oder zylinderindividuelles Abschalten der Einspritzung über Ausblendmuster einzelner Zylinder, oder es werden sogenannte "harte" Maßnahmen vorgenommen, indem alle Zylinder ohne Ausblendmuster "hart" abschaltet werden.

Für die weiteren Betrachtungen ist in Figur 1 anhand der Kennlinie K*_{VKM} eine negative Steigung m*_{VKM} (ΔM*_{VKM}/Δt*_{VKM}) der Kennlinie K*_{VKM} des Drehmomentes des Verbrennungsmotors über der Zeit t in der Zeitspanne Δt*_{VKM} bei einem herkömmlichen Lastabbau dargestellt. Die Zeitspanne Δt*_{VKM} entspricht einem Überlagerungszeitraum Δt_{Ü} (t_{Ü-E} - t_{Ü-s}), auf den detailliert noch eingegangen wird.

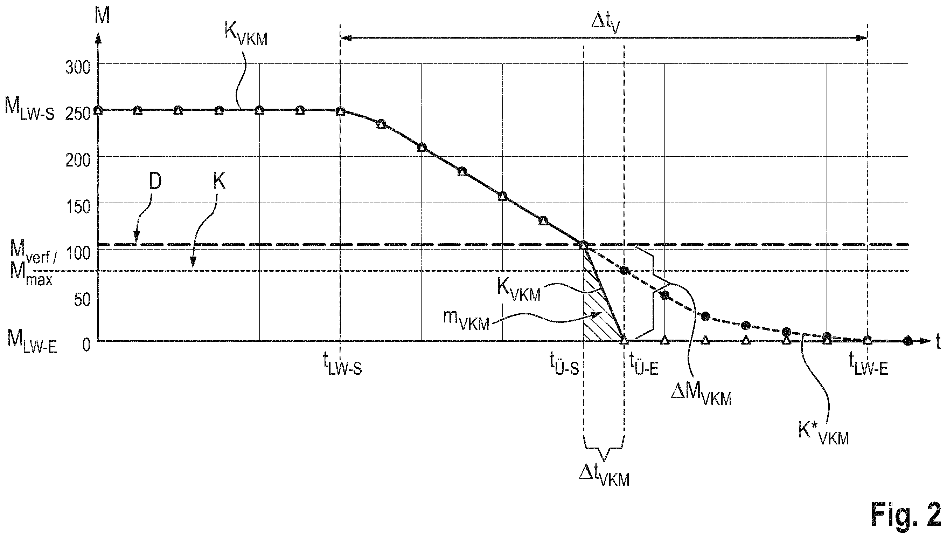

Es ist erfindungsgemäß vorgesehen, dass das Drehmoment des Verbrennungsmotors innerhalb eines möglichst kurzen Zeitraumes, der kürzer ist als der bisherige Verzögerungszeitraum Δt_{V}, abgebaut wird, wobei das motorische Drehmoment des Elektromotors kompensiert wird, wie nachfolgend anhand der Figuren 2 bis 4 ausgehend von dem beispielhaften Betriebspunkt M_{LW-S}/t_{LW-S} nach Figur 1 erläutert wird.

Es ist vorgesehen, dass das "auslaufende" Drehmoment gemäß der Erfindung durch Kombination des zur Verfügung stehenden Drehmomentes des Verbrennungsmotors und des Elektromotors abgebaut wird.

Das heißt, die herkömmliche Vorgehensweise, die eine Abrampung des inneren Drehmomentes des Verbrennungsmotors, welches hier stets betrachtet wird, bis zu dem inneren minimalen Drehmoment und eine darauffolgende verbrennungsmotorische Abschaltung am Ende des Verzögerungszeitraumes Δt_{V} vorsieht, wird erfindungsgemäß derart geändert, dass die verbrennungsmotorische Abschaltung der Einspritzung in die Zylinder des Verbrennungsmotors gegenüber der aus dem Stand der Technik bekannten Vorgehensweise zeitlich möglichst weit nach vorne vorverlegt wird, das heißt zeitlich früher stattfindet als bisher.

Durch den durch das erfindungsgemäße Verfahren bewirkten geringeren Zeitraum, in dem der Verbrennungsmotor nach dem Startzeitpunkt t_{LW-S} noch in Betrieb ist, das heißt noch Kraftstoff eingespritzt wird, wird in vorteilhafter Weise das Einsparpotential (geringerer Verbrauch und somit geringere CO₂₋Emmissionen) bewirkt.

Es ist erfindungsgemäß vorgesehen, dass in den jeweiligen Betriebspunkten eine Abnahme des durch den Verbrennungsmotor zur Verfügung gestellten Drehmoments bei dem negativen Lastwechsel, bei dem bisher steuerungsseitig erst in dem vorgegebenen Verzögerungszeitraum Δt_{V} nach Figur 1 das vollständige Abschalten der Einspritzung in die Zylinder des Verbrennungsmotors vorgenommen wird, innerhalb des Verzögerungszeitraumes Δt_{V} durch das motorische Drehmoment des Elektromotors kompensiert werden kann, so dass das vollständige Abschalten der Einspritzung in die Zylinder des Verbrennungsmotors, früher als bisher zu dem in Figur 1 gezeigten Endzeitpunkt t_{LW-E}, vorgenommen werden kann, so dass der Verzögerungszeitraum Δt_{V} zwar gleich lang bleibt aber der Verbrennungsmotor sein jeweiliges Drehmoment M_{LW-S} früher abbaut und die Einspritzung in die Zylinder abgeschaltet wird.

Die Aufgabe besteht somit nicht darin, den Verzögerungszeitraum Δt_{V} zu verkürzen, sondern darin, die Einspritzung des Verbrennungsmotors früher abzuschalten als bisher, wobei vorgesehen ist, die ursprüngliche in der Motorsteuerung abgelegte Kennlinie K*_{VKM} nachzubilden, indem die zur Verfügung stehenden Momente des Verbrennungsmotors und des Elektromotors derart miteinander kombiniert werden, dass das Drehmoment des Verbrennungsmotors innerhalb des Verzögerungszeitraumes Δt_{V} möglichst früh durch das Drehmoment des Elektromotors kompensiert wird, wie nachfolgend weiter erläutert ist.

Mit anderen Worten, es ist vorgesehen, dass die Betriebszeit des Verbrennungsmotors, das heißt gegenüber der herkömmlichen Vorgehensweise, zeitlich verkürzt wird, indem das "auslaufende" Drehmoment des Verbrennungsmotors unter Beibehaltung des erwünschten harmonischen Momentenabbaus (ohne Qualitätseinbußen hinsichtlich des Fahrverhaltens) bei gleichzeitiger Ersparnis von Kraftstoff über den Verbrennungsmotor und den Elektromotor derart koordiniert insbesondere eingestellt wird, dass das zu dem Startzeitpunkt t_{LW-S} des Lastwechsels durch den Verbrennungsmotor aufgebrachte Drehmoment M_{LW-S} ab einem bestimmten Zeitpunkt, der nachfolgend als Startzeitpunkt t_{Ü-S} der Überlagerung bezeichnet wird, durch das zur Verfügung stehende motorische Drehmoment des Elektromotors teilweise und zu einem späteren erreichten bestimmten Zeitpunkt, der nachfolgend als Endzeitpunkt t_{Ü-E} der Überlagerung bezeichnet wird, vollständig kompensiert wird, wobei vorab in einer Zusammenschau auf die Figuren 1 bis 4 hingewiesen wird.

Der Endzeitpunkt t_{Ü-E} des Überlagerungszeitraumes Δ_{tÜ}, der mit dem Startzeitpunkt t_{Ü-S} beginnt, ab dem der Verbrennungsmotor kein positives Drehmoment mehr beitragen muss, da er vollständig durch den Elektromotor kompensiert wird, ergibt sich aus dem maximal möglichen Momentenbeitrag des Elektromotors, wie nachfolgend erläutert ist.

Die Erfindung besteht unter anderem darin, dass in dem Applikationsprogramm der Motorsteuerung betriebspunktabhängig entschieden wird, zu welchem Zeitpunkt die Einspritzung des Verbrennungsmotors abgeschaltet wird, wenn in der Motorsteuerung in dem negativen Lastwechselfall die Anforderung vorliegt, das Drehmoment des Hybrid-Elektrofahrzeuges abzubauen. Das heißt, die Einspritzung des Verbrennungsmotors des Hybrid-Elektrofahrzeuges wird früher als bisher beendet und der Verbrennungsmotor wird schnellstmöglich heruntergefahren, so dass der Verbrennungsmotor möglichst frühzeitig kein Drehmoment mehr abgibt.

Das Verfahren sieht deshalb in einer Ausgestaltung erfindungsgemäß vor, dass eine kontinuierliche Berechnung einer Höhe eines Deaktivierungs-Momentenschwellenwertes vorgenommen wird, bei dessen Erreichen der Verbrennungsmotor mit den dem Fachmann bekannten Vorgehensweisen entweder "weich" durch Zündwinkelverstellung und/oder Veränderung der Füllung der Zylinder mit Verbrennungsluft und/oder Kraftstoff und/oder zylinderindividuelles Abschalten der Einspritzung einzelner Zylinder oder aller Zylinder über Ausblendmuster oder ohne Ausblendmuster "hart" abgeschaltet werden kann.

Es besteht grundsätzlich eine alternative Vorgehensweise, bei der kein Deaktivierungs-Momentenschwellenwert ermittelt wird, um den Startzeitpunkt t_{Ü-S} der Überlagerung zu ermitteln. Der Startzeitpunkt t_{Ü-S} der Überlagerung kann im Applikationsprogramm der Motorsteuerung auch auf eine andere Art und Weise ermittelt werden, wie später noch erläutert wird.

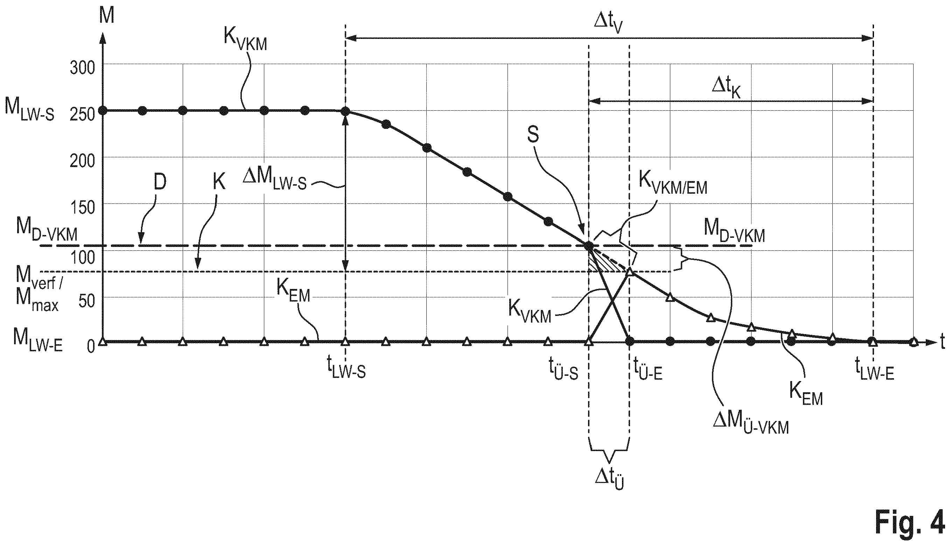

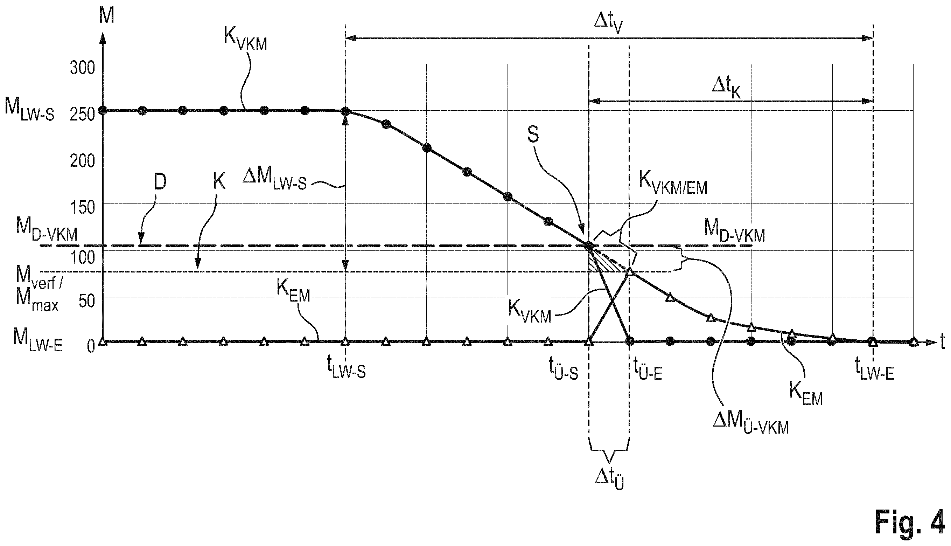

Zur Berechnung der Höhe des Deaktivierungs-Momentenschwellenwertes, die mittels einer in den Figuren 2 und 4 eingetragenen Deaktivierungslinie D verdeutlicht ist, wird nachfolgend ausgeführt. Ferner wird nachfolgend auch auf die in den Figuren 2 und 4 eingetragene Kompensationslinie K eingegangen.

Die Kompensationslinie K gibt die Höhe beziehungsweise den Betrag des vorgegebenen verfügbaren Drehmomentes M_{verf} beziehungsweise bevorzugt des maximalen Drehmomentes Mₘₐₓ des Elektromotors an, mittels dem in einem Kompensationszeitraum Δt_{K} (t_{LW-E} - t_{Ü-S}) das Drehmoment des Verbrennungsmotors zunächst teilweise und anschließend vollständig durch den Elektromotor kompensiert werden kann.

### Erster Schritt:

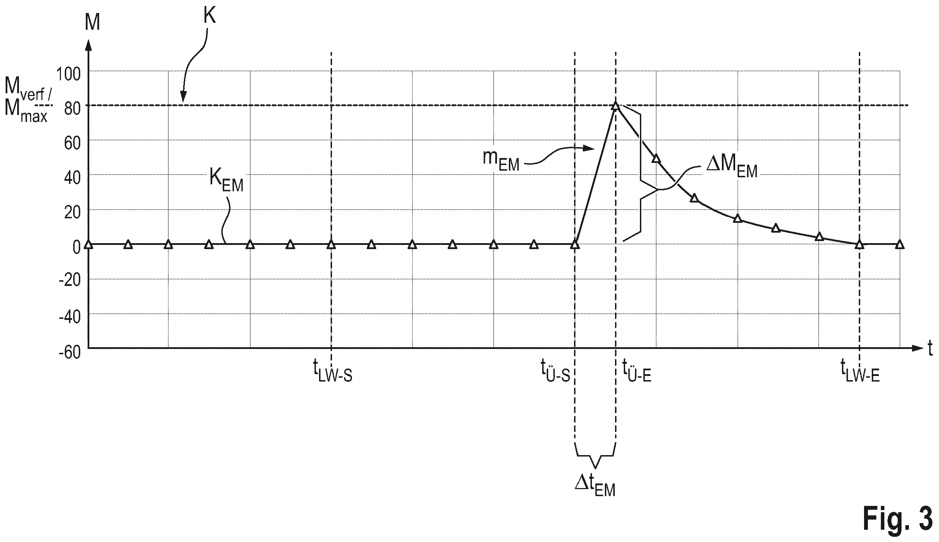

Zunächst wird in dem Applikationsprogramm der Motorsteuerung in einem ersten Schritt ständig ermittelt, in welcher Zeitspanne Δt_{EM} und mit welchem Betrag M_{verf} der Elektromotor zu einem bestimmten Zeitpunkt ein verfügbares Drehmoment M_{verf} zur vollständigen Kompensation des Verbrennungsmotors liefern kann, wobei hierzu auf Figur 3 verwiesen wird.

Figur 3 zeigt beispielhaft eine Kennlinie K_{EM} des motorischen Drehmomentes des Elektromotors des Hybrid-Elektrofahrzeuges über der Zeit t.

Als verfügbares Drehmoment M_{verf} wird das maximale Drehmoment Mₘₐₓ und ein unterhalb des maximalen Drehmomentes Mₘₐₓ liegendes Drehmoment (ohne Bezugszeichen) angesehen.

Erfindungsgemäß wird bevorzugt vorgeschlagen, dass in dem ersten Schritt nicht ein unterhalb des maximalen Drehmomentes Mₘₐₓ liegendes vorgebbares Drehmoment, sondern das maximale Drehmoment Mₘₐₓ in der zugehörigen kürzesten Zeitspanne Δt_{EM} ermittelt wird, die zur Verfügung steht, da dadurch der früheste Zeitpunkt zur Kompensation des Drehmomentes des Verbrennungsmotors ermittelt werden kann, wodurch der erfindungsgemäße Effekt am größten ist.

Es versteht sich, dass das Verfahren aber auch mit einem unterhalb des maximalen Drehmomentes Mₘₐₓ liegenden Drehmoment mit einer vorgegebenen Zeitspanne, die nicht die kürzeste möglich Zeitspanne zu dem Aufbau des Drehmomentes sein muss, durchgeführt werden kann, so dass der erfindungsgemäße Effekt geringer ausfällt.

Es wird erfindungsgemäß erreicht, dass der Verbrennungsmotor innerhalb des harmonischen Verzögerungszeitraumes Δt_{V} (t_{LW-E} - t_{LW-S}) bei der erfindungsgemäßen Vorgehensweise nur bis zu dem Endzeitpunkt t_{Ü-E} der Überlagerung der Drehmomente in Betrieb ist, wie noch verdeutlicht wird.

Im dargestellten Ausführungsbeispiel wird die Betriebszeit des Verbrennungsmotors im negativen Lastwechsel um beispielhaft 50 % reduziert. Es versteht sich, dass der Effekt in Abhängigkeit der im jeweiligen Lastfall vorliegenden Beträge der erläuterten Momente, insbesondere dem Drehmoment zu dem Startzeitpunkt t_{LW-S} des Lastwechsels M_{LW-S} und dem verfügbaren Drehmoment M_{verf} des Elektromotors, insbesondere dem maximal verfügbaren Drehmoment Mₘₐₓ des Elektromotors, größer oder kleiner sein kann.

In der Figur 3 ist anhand des ausgewählten Ausführungsbeispieles verdeutlicht, dass der Elektromotor gemäß Kennlinie K_{EM} zu einem bestimmten Zeitpunkt mit einer positiven Steigung m_{EM} (ΔM_{EM}/Δt_{EM}) gemäß der Kennlinie K_{EM} des Drehmomentes des Elektromotors über der Zeit t in der kürzesten Zeitspanne Δt_{EM} das maximale Drehmoment Mₘₐₓ zur Verfügung stellen kann.

Das aktuell verfügbare Drehmoment M_{verf}, hier bevorzugt das maximale Drehmoment Mₘₐₓ des Elektromotors beziehungsweise der aktuell mögliche maximale Momenten-Gradient m_{EM} wird, wie bereits erwähnt, dem Applikationsprogramm der Motorsteuerung in jedem von dem Applikationsprogramm der Motorsteuerung abgefragten Betriebspunkt zur Verfügung gestellt.

Mit anderen Worten, alle Werte der Kennlinie K_{EM} des Drehmomentes des Elektromotors über der Zeit t stehen neben den zuvor genannten Werten der Kennlinie K*_{VKM} des Drehmomentes der Verbrennungskraftmaschine über der Zeit t zur weiteren Verwendung innerhalb des erfindungsgemäßen Verfahrens zur Verfügung.

Die Zeitspanne Δt_{EM} kann in dem ersten Schritt nach der Gleichung ${Δt}_{EM} = {M}_{verf} / {m}_{EM} oder {Δt}_{EM} = {M}_{max} / {m}_{EM}$ ermittelt werden.

Bevorzugt gibt somit der Momenten-Gradient m_{EM} mithin die Änderungsgeschwindigkeit des von dem Elektromotor zur Verfügung stellbaren Drehmoments an, wobei innerhalb des Verfahrens eine vorgebbare verfügbare, bevorzugt die maximal mögliche Änderungsgeschwindigkeit m_{EM}, des Elektromotors berücksichtigt wird. Mit anderen Worten, durch die Kenntnis über die Höhe des Betrages des maximal zur Verfügung stehenden, stellbaren Moments M_{verf}, bevorzugt Mₘₐₓ des Elektromotors oder Mₘₐₓ und des maximalen Momenten-Gradienten m_{EM} kann die kürzeste Zeitspanne Δt_{EM} ermittelt werden.

In den Figuren 3 bis 4 ist der Betrag M_{verf} oder bevorzugt Mₘₐₓ, der dem maximal möglichen Momentenbeitrag entspricht, wenn M_{verf} = Mₘₐₓ gewählt ist, durch die Kompensationslinie K dargestellt, welche die Kompensations-Momentenschwelle bildet.

### Zweiter Schritt:

In einem zweiten Schritt ist vorgesehen, dass in dem Applikationsprogramm der Motorsteuerung eine Deaktivierungs-Momentendifferenz ΔM_{Ü-VKM} ermittelt wird, wie in Figur 4 verdeutlicht ist.

Die Figur 4 zeigt eine Kennlinie K_{VKM}/K_{VKM/EM}/K_{EM} des Drehmomentes des Hybrid-Elektrofahrzeuges, die ab dem Startzeitpunkt t_{LW-S} in dem Verzögerungszeitraum Δt_{V} den Kompensationszeitraum Δt_{K} umfasst, in dem der Überlagerungszeitraum Δt_{Ü} als Zeitfenster (t_{Ü-E} - t_{Ü-S}) ausgebildet ist, der/das noch näher erläutert wird.

In Bezug auf den Betrag des zur Verfügung stehenden maximalen Drehmomentes Mₘₐₓ des Elektromotors (= maximale Kompensationshöhe) ergibt sich das Zeitfenster (t_{Ü-E} - t_{Ü-S}), das heißt der Überlagerungszeitraum Δt_{Ü}, in dem eine Kompensation der Drehmomente stattfindet, wie nachfolgend noch erläutert wird.

In Abhängigkeit des physikalisch hinsichtlich der Höhe Mₘₐₓ nach oben begrenzten Momentaufbaus des Elektromotors kann der Verbrennungsmotor gegenüber der herkömmlichen Vorgehensweise vorzeitig ein Drehmoment steiler abbauen, wobei ermittelt wird, wann der Überlagerungszeitraum Δt_{Ü} beginnt.

Da der Verbrennungsmotor als vorgegebene Randbedingung des Verfahrens in der gleichen Zeitspanne Δt_{Ü} sein Drehmoment abbauen soll, wie der Elektromotor sein maximal zur Verfügung stehendes Drehmoment Mₘₐₓ aufbaut beziehungsweise aufbauen soll, gilt für die Zeitspanne Δt_{EM} des Elektromotors und die Zeitspanne Δt_{VKM} des Verbrennungsmotors die Abhängigkeit Δt_{EM} = Δt_{VKM}, wobei in diesen gleich langen Zeitspannen eine Überlagerung der Drehmomente M_{EM} und M_{VKM} in dem Überlagerungszeitraum Δt_{Ü} erfolgt, so dass die Abhängigkeit gilt, dass die Zeitspannen Δt_{EM} = Δt_{VKM} = Δt_{Ü} gleich lang sind.

Innerhalb des Überlagerungszeitraumes Δt_{Ü} wird das Drehmoment M_{VKM} des Verbrennungsmotors zunächst teilweise durch das Drehmoment M_{EM} des Elektromotors ersetzt, wie aus Figur 4 anhand der Kennlinie K_{VKM}/K_{VKM/EM}/K_{EM} des Drehmomentes des Hybrid-Elektrofahrzeuges im Überlagerungszeitraum Δt_{Ü} und der nachfolgenden Beschreibung deutlich wird.

### Kennlinie K_{VKM}/K_{VKM/EM}/K_{EM} und Kennlinienabschnitte:

Die Kennlinie K_{VKM}/K_{VKM/EM}/K_{EM} gemäß Figur 4 setzt sich mit Startzeitpunkt t_{LW-S} des Lautwechsels beginnend, im Verzögerungszeitraum Δt_{V} (t_{LW-E} - t_{LW-S}), wie folgt zusammen:
Der Kennlinienabschnitt K_{VKM} der Kennlinie K_{VKM}/K_{VKM/EM}/K_{EM} in der Zeitspanne vom Startzeitpunkt t_{LW-S} des Lastwechsels bis zu dem Startzeitpunkt t_{Ü}-_{S} der Überlagerung entspricht in diesem vergleichsweisen Kennlinienabschnitt K_{VKM} der Kennlinie K*_{VKM} nach Figur 1 (vergleiche Figur 1 und 4).

Der Kennlinienabschnitt K_{VKM/EM} der Kennlinie K_{VKM}/K_{VKM/EM}/K_{EM} in der Zeitspanne des Überlagerungszeitraumes Δt_{Ü} (t_{Ü-E} - t_{Ü-S}) entspricht in diesem vergleichsweisen Kennlinienabschnitt K_{VKM/EM} der Kennlinie K*_{VKM} nach Figur 1 (vergleiche Figur 1 und 4).

In dem Überlagerungszeitraum Δt_{Ü} (t_{Ü-E} - t_{Ü-S}) sind die Drehmomente des Verbrennungsmotors und des Elektromotors gemäß den Kennlinien K_{VKM} (Figur 2) und K_{EM} (Figur 3) überlagert und in dem Kennlinienabschnitt mit der Bezeichnung K_{VKM}/K_{EM} zusammengefasst.

Der Kennlinienabschnitt K_{EM} der Kennlinie K_{VKM}/K_{VKM/EM}/K_{EM} ab dem Endzeitpunkt t_{Ü-E} der Überlagerung bis zu dem Endzeitpunkt t_{LW-E} des Lastwechsels entspricht in diesem Kennlinienabschnitt K_{EM} wieder vergleichsweise der Kennlinie K*_{VKM} nach Figur 1 (vergleiche Figur 1 und 4.) Dieser Kennlinienabschnitt, der in Figur 4 mit K_{EM} bezeichnet ist, wird ausschließlich durch den Elektromotor gefahren, da der Verbrennungsmotor ab dem Zeitpunkt t_{Ü-E} kein Drehmoment mehr abgibt, das heißt, t_{Ü-E} - vergleiche Figur 4 - liegt zeitlich früher als T_{LW-E} - vergleiche Figur 1 oder Figur 2 Kennlinie K*_{VKM}.

Es wird deutlich, dass die in Figur 4 dargestellte Kennlinie K_{VKM}/K_{VKM/EM}/K_{EM} der Kennlinie K*_{VKM} in Figur 1 entspricht, das heißt, die Kennlinie K*_{VKM} in Figur 1 wird durch die Kennlinie K_{VKM}/K_{VKM/EM}/K_{EM} in Figur 4 in dem Applikationsprogramm der Motorsteuerung nachgebildet, wobei der Verbrennungsmotor jetzt erfindungsgemäß zu dem Startzeitpunkt t_{Ü-S} der Überlagerung bis zu dem Endzeitpunkt t_{Ü-E} der Überlagerung nach der Kennlinie K_{VKM} in Figur 2 und nicht nach der Kennlinie K*_{VKM} heruntergefahren wird.

Die Figur 2 zeigt die Kennlinie K_{VKM} des Drehmomentes der Verbrennungskraftmaschine des Hybrid-Elektrofahrzeuges über der Zeit, deren Verlauf sich ab einem Startzeitpunkt t_{LW-S} von der Kennlinie K*_{VKM} des Drehmomentes der Verbrennungskraftmaschine über der Zeit t gemäß dem Stand der Technik nach Figur 1 unterscheidet.

In der Figur 2 ist anhand des ausgewählten Ausführungsbeispieles verdeutlicht, dass der Verbrennungsmotor gemäß Kennlinie K_{VKM} zu einem bestimmten Zeitpunkt mit einer negativen Steigung m_{VKM} (ΔM_{VKM}/Δt_{VKM}) gemäß der Kennlinie K_{VKM} des Drehmomentes des Verbrennungsmotors über der Zeit t in der Zeitspanne Δt_{VKM} heruntergefahren werden kann, wobei die Zeitspannen Δt_{VKM} = Δt_{Ü}, wie oben erläutert, gleich lang sind.

Der Überlagerungszeitraum Δt_{Ü} (t_{Ü-E} - t_{Ü-S}), in dem der Verbrennungsmotor in dem Kennlinienabschnitt K_{VKM} der Kennlinie K_{VKM}/K_{VKM/EM}/K_{EM} bis zu dem Endzeitpunkt t_{Ü-E} der Überlagerung heruntergefahren und der Elektromotor gemäß dem Kennlinienabschnitt K_{EM} der Kennlinie K_{VKM}/K_{VKM/EM}/K_{EM} bis zu dem Endzeitpunkt t_{Ü-E} der Überlagerung hochgefahren wird, ergibt sich aus dem im Motorsteuergerät zur Verfügung stehenden und gemäß Ausführungsbeispiel in Figur 3 dargestellten Momenten-Gradienten m_{EM} des Drehmomentes des Elektromotors.

In dem zweiten Schritt wird nun - wie erwähnt - für den Überlagerungszeitraum Δt_{Ü} der Momenten-Gradient m*_{VKM} des herkömmlichen Lastabbaus des Verbrennungsmotors gemäß Figur 1 in der Motorsteuerung berechnet und ebenfalls dem Verfahren der vorliegenden Erfindung zur Verfügung gestellt.

Aus der Zeitspanne Δt_{EM} des Elektromotors (vergleiche Figur 3) und dem Momenten-Gradienten m*_{VKM} des Verbrennungsmotors wird prädiktiv ein Betrag nach der Gleichung ${ΔM}_{Ü - VKM} = {Δt}_{EM} x {m *}_{VKM}$ berechnet, der der Deaktivierungs-Momentendifferenz ΔM_{Ü-VKM} entspricht.

Prädiktiv heißt, dass in dem Applikationsprogramm der Motorsteuerung spätestens zu dem Zeitpunkt t_{LW-S} alle zuvor genannten erforderlichen Werte vorhersagbar zur Verfügung stehen, um die Deaktivierungs-Momentendifferenz ΔM_{Ü-VKM} und damit den Startzeitpunkt t_{Ü-S} zur Kompensation rechtzeitig bestimmen zu können.

### Dritter Schritt:

In einem dritten Schritt ist es nun möglich, in der Motorsteuerung den Betrag des Absolutwertes eines Deaktivierungsmomentes M_{D-VKM} nach der Gleichung ${M}_{D - VKM} = {M}_{verf} + {ΔM}_{Ü - VKM} , bevorzugt {M}_{D - VKM} = {M}_{max} + {ΔM}_{Ü - VKM}$ zu bestimmen.

Das derart bestimmte Deaktivierungsmoment M_{D-VKM} des Verbrennungsmotors liegt hinsichtlich seines Betrages auf der in den Figuren 2 und 4 eingezeichneten Deaktivierungslinie D und bildet den Deaktivierungs-Momentenschwellenwert.

Somit wird durch den Schnittpunkt S zwischen dem ermittelten Deaktivierungsmoment M_{D-VKM} auf der Deaktivierungslinie D und der Kennlinie K_{VKM}, die der Kennlinie K*_{VKM} entspricht, der Startzeitpunkt t_{Ü-S} des Überlagerungszeitraumes Δt_{Ü} zur Kompensation des Drehmomentes des Verbrennungsmotors durch den Elektromotor und der Startpunkt der Kompensation insgesamt, die zeitlich über den Überlagerungszeitraum Δt_{Ü} hinausgeht, eindeutig festgelegt.

In vorteilhafter Weise ist es somit in einfacher Weise mittels der erläuterten Vorgehensweise möglich, die horizontale Deaktivierungslinie D zu bestimmen, aus der sich bei dieser Vorgehensweise gemäß Figur 4 durch den Schnittpunkt S mit der Kennlinie K_{VKM} in vertikaler Richtung gesehen der Startzeitpunkt t_{Ü-S} ergibt.

### Vierter Schritt:

In einem vierten Schritt erfolgt in dem Applikationsprogramm der Motorsteuerung schließlich die Ermittlung des Momenten-Gradienten m_{VKM} des Verbrennungsmotors gemäß den Figuren 2 und 4 in dem Überlagerungszeitraum Δt_{Ü} (t_{Ü-E} - t_{Ü-S}) in der Zeitspanne Δt_{EM} = Δt_{VKM} = Δt_{Ü} nach der Gleichung ${m}_{VKM} = {M}_{D - VKM} / {Δt}_{Ü . .}$

Der Momenten-Gradient m_{VKM} des Verbrennungsmotors wird ausgehend von dem Betrag des Drehmomentes M_{D-VKM} zu dem Zeitpunkt t_{Ü-S} zeitlich an Δt_{Ü}, den Überlagerungszeitraum, angepasst, so dass der Betrag des Drehmomentes M_{LW-E} des Verbrennungsmotors zu dem Endzeitpunkt t_{Ü-E} = 0 ist.

In Figur 4 und den Figuren 2 und 3 wird in Zusammenschau deutlich, dass der Betrag des Drehmomentes ΔM_{VKM} des Verbrennungsmotors größer oder mindestens gleich groß dem Betrag des Drehmomentes ΔM_{EM} des Elektromotors ist. Somit ergibt sich, dass der Betrag des Momenten-Gradienten m_{VKM} des Verbrennungsmotors größer oder mindestens gleich groß dem Betrag des Momenten-Gradienten m_{EM} des Elektromotors ist.

Gemäß dem Momenten-Gradienten m_{VKM} des Verbrennungsmotors wird der Verbrennungsmotor zu dem Startzeitpunkt t_{Ü-S} der Momentenüberlagerung im Überlagerungszeitraum Δt_{Ü} "weich" durch Zündwinkelverstellung und/oder Veränderung der Füllung der Zylinder mit Verbrennungsluft und/oder Kraftstoff und/oder zylinderindividuelles Abschalten der Einspritzung einzelner Zylinder über Ausblendmuster oder ohne Ausblendmuster "hart" abgeschaltet, so dass der Verbrennungsmotor zu dem Endzeitpunkt t_{Ü-E}, in dem die Momentenüberlagerung endet, kein Drehmoment mehr abgibt. Mit anderen Worten, der Momenten-Gradient m_{VKM} des Verbrennungsmotors nach den Figuren 2 und 4 ergibt sich aus dem Überlagerungszeitraum Δt_{Ü} und dem zu dem Startzeitpunkt t_{Ü-S} der Momentenüberlagerung vorliegenden Drehmoment des Verbrennungsmotors, wobei der Betrag des vorliegenden Drehmomentes des Verbrennungsmotors in Abhängigkeit des Startzeitpunktes t_{LW-S} des jeweils stattfindenden negativen Lastwechsels betriebspunktabhängig variiert.

Zu dem Endzeitpunkt t_{Ü-E} des Überlagerungszeitraumes Δt_{Ü} ist es nun erfindungsgemäß in vorteilhafter Weise schon vor dem Endzeitpunkt t_{LW-E} des Lastwechsels möglich, die vollständige verbrennungsmotorische Abschaltung der Einspritzung zu bewirken.

Mit anderen Worten, bei dem erfindungsgemäßen Verfahren liegt der Endzeitpunkt t_{Ü-E} der Einspritzung in die Zylinder des Verbrennungsmotors vergleichsweise zeitlich vor dem vorgesehenen Endzeitpunkt t_{LW-E} des Lastwechsels. In vorteilhafter Weise kann dadurch je nach Art des Hybrid-Elektrofahrzeuges früher entweder in das Schubabschalten bei MHEV-Fahrzeugen oder in das reine elektrische Fahren (bei PHEV-Fahrzeugen oder HEV-Fahrzeugen) gewechselt werden kann.

Es besteht grundsätzlich die alternative Möglichkeit, keine Deaktivierungs-Momentenschwelle, das heißt keinen Deaktivierungs-Schwellenwert, zu berechnen, sondern es kann auch auf andere Art und Weise der Zeitpunkt ermittelt werden, zu dem ein Abschalten der Einspritzung beginnen soll. Bei der alternativen Vorgehensweise wird der Startzeitpunkt t_{Ü-S} der Überlagerung beziehungsweise der Kompensation im Applikationsprogramm der Motorsteuerung auf andere Art und Weise ermittelt, wie nachfolgend noch erläutert ist.

### Alternative Vorgehensweise:

### Erster Schritt:

Bei der alternativen Vorgehensweise wird analog zu der vorher erläuterten Vorgehensweise stets die Zeitspanne ΔT_{EM} ermittelt, in welcher der Elektromotor zu einem bestimmten Zeitpunkt ein verfügbares Drehmoment M_{verf} zur vollständigen Kompensation des Verbrennungsmotors liefern kann, wobei wieder auf Figur 3 verwiesen wird.

Wie bisher wird das aktuell verfügbare Drehmoment M_{verf} beziehungsweise der aktuell mögliche Momenten-Gradient m_{EM} ermittelt und dem Applikationsprogramm der Motorsteuerung in jedem von dem Applikationsprogramm der Motorsteuerung abgefragten Betriebspunkt zur Verfügung gestellt.

Die Zeitspanne Δt_{EM} wird auch in diesem ersten Schritt nach der Gleichung ${Δt}_{EM} = {M}_{verf} / {m}_{EM} oder {Δt}_{EM} = {M}_{max} / {m}_{EM}$ ermittelt.

### Zweiter Schritt:

Es erfolgt, anders als bisher, jetzt zunächst die Berechnung des Endzeitpunktes t_{Ü-E} des Überlagerungszeitraumes Δt_{Ü}, bei dem der Elektromotor mit seinem verfügbaren Drehmoment M_{verf}/Mₘₐₓ das Drehmoment des Verbrennungsmotors vollständig (= vollständiges Kompensations-Drehmoment) zu dem Endzeitpunkt t_{Ü-E} des Überlagerungszeitraumes Δt_{Ü} kompensieren kann.

Zur Bestimmung des vollständigen Kompensations-Drehmomentes wird die Momenten-Differenz ΔM_{LW-S} zu dem Startzeitpunkt t_{LW-S} des negativen Lastwechsels, das heißt das bei t_{LW-S} anliegende Drehmoment M_{LW-S} des Verbrennungsmotors, von dem verfügbaren Drehmoment M_{verf}/Mₘₐₓ (dem vollständigen Kompensationsdrehmoment) des Elektromotors nach der Gleichung ${ΔM}_{LW - S} = {M}_{LW - S} - {M}_{verf} / {M}_{max}$ abgezogen.

Die Berechnung des Endzeitpunktes t_{Ü-E} des Überlagerungszeitraumes Δt_{Ü} bezogen auf den Beginn des Lastwechsels zu dem Startzeitpunkt t_{LW-S} des Lastwechsels wird anschließend aus der Momenten-Differenz ΔM_{LW-S} = M_{LW-S} - M_{verf}/Mₘₐₓ und aus dem zur Verfügung gestellten Momenten-Gradienten m*_{VKM} gemäß Kennlinie K*_{VKM} (vergleiche Figur 1) nach der Gleichung ${t}_{Ü - E} = \left({M}_{LW - S}-{M}_{verf}/{M}_{max}\right) / m {*}_{VKM}$ bestimmt.

### Dritter Schritt:

Die Berechnung des Startzeitpunktes t_{Ü-S} des Überlagerungszeitraumes Δt_{Ü} wird bei dieser alternativen Vorgehensweise, auf den Startzeitpunkt t_{LW-S} des Lastwechsels bezogen, wie folgt vorgenommen:
Zunächst gilt wieder die vorgegebene Randbedingung des Verfahrens, dass der Verbrennungsmotor in der gleichen Zeitspanne sein Drehmoment abbauen soll, wie der Elektromotor sein maximal zur Verfügung stehendes Drehmoment Mₘₐₓ aufbaut beziehungsweise aufbauen soll. Es gilt für die Zeitspanne Δt_{EM} des Elektromotors und die Zeitspanne Δt_{VKM} des Verbrennungsmotors die Abhängigkeit Δt_{EM} = Δt_{VKM}, wobei in diesen gleich langen Zeitspannen eine Überlagerung der Drehmomente M_{EM} und M_{VKM} in dem Überlagerungszeitraum Δt_{Ü} erfolgt, so dass die Abhängigkeit gilt, dass Δt_{EM} = Δt_{VKM} = Δt_{Ü} ist.

Bei dieser Vorgehensweise, bei der jetzt die Zeitspanne Δt_{EM} und der Endzeitpunkt t_{Ü-E} der Überlagerung des Überlagerungszeitraumes Δt_{Ü} bekannt sind, kann jetzt der Startzeitpunkt t_{Ü-S} der Überlagerung gemäß der Gleichung ${t}_{Ü - S} = {t}_{Ü - E} - {Δt}_{Ü}$ als Differenz des Endzeitpunktes t_{Ü-E} und des Überlagerungszeitraumes Δt_{Ü} berechnet werden.

### Vierter Schritt:

Es erfolgt schließlich analog zu der ersten Vorgehensweise wieder die Berechnung des erforderlichen Momenten-Gradienten des Verbrennungsmotors m_{VKM} im Überlagerungszeitraum Δt_{Ü} gemäß der Gleichung ${m}_{VKM} = {M}_{VKM} / {Δt}_{Ü}$ zu dem Startzeitpunkt t_{Ü-S}, so dass zu dem Endzeitpunkt t_{Ü-E} der Überlagerung kein Momentenbeitrag (Drehmoment des Verbrennungsmotors = 0) mehr durch den Verbrennungsmotor gestellt werden muss, so dass die Einspritzung in die Zylinder des Verbrennungsmotors zu diesem Endzeitpunkt t_{Ü-E} vollständig beendet wird.

Bei dieser alternativen Vorgehensweise gelten die Erläuterungen zur Kennlinie K_{VKM}/K_{VKM/EM}/K_{EM} und den Kennlinienabschnitten gemäß Figur 4 im zweiten Schritt der zuvor erläuterten Vorgehensweise für die alternative Vorgehensweise entsprechend.

Es wird im Unterschied zu der ersten Vorgehensweise deutlich, dass bei der alternativen Vorgehensweise der Überlagerungszeitraum Δt_{Ü}, insbesondere der Startzeitpunkt t_{Ü-S} des Überlagerungszeitraumes Δt_{Ü}, auf andere Art und Weise ermittelt wird. Im zweiten Schritt wird bei der alternativen Vorgehensweise nicht die Deaktivierungs-Momentendifferenz ΔM_{Ü-VKM}, sondern die Momenten-Differenz ΔM_{LW-S} zu dem Startzeitpunkt t_{LW-S} des negativen Lastwechsels ermittelt, wodurch sich der dritte Schritt der alternativen Vorgehensweise ebenfalls von dem dritten Schritt zur Bestimmung des Startzeitpunktes t_{Ü-S} der Überlagerung, das heißt der zunächst teilweisen und nach dem Endzeitpunkt t_{Ü-E} vollständigen Kompensation des Drehmomentes des Verbrennungsmotors durch den Elektromotor, unterscheidet.

### Bezugszeichenliste

### Kennlinien:

- K*_{VKM}: Kennlinie des Drehmomentes einer Verbrennungskraftmaschine über der Zeit t (Stand der Technik)
- K_{VKM}: Kennlinie des Drehmomentes der Verbrennungskraftmaschine über der Zeit t
- K_{EM}: Kennlinie des Drehmomentes eines Elektromotors über der Zeit t
- K_{VKM/EM}: Kennlinie des kombinierten Drehmomentes der Verbrennungskraftmaschine und des Elektromotors über der Zeit im Überlagerungszeitraum Δt_{Ü}
- K_{VKM}/K_{VKM/EM}/K_{EM}: Kennlinie des Drehmomentes eines Hybrid-Elektrofahrzeuges

### Momente:

- M_{LW-S}: Moment zu dem Startzeitpunkt t_{LW-S} des Lastwechsels
- M_{LW-E}: Moment zu dem Endzeitpunkt T_{LW-E} des Lastwechsels
- M_{verf}: verfügbares Drehmoment des Elektromotors
- Mₘₐₓ: maximal verfügbares Drehmoment des Elektromotors
- ΔM_{Ü-VKM}: Deaktivierungs-Momentendifferenz
- M_{D-VKM}: Deaktivierungsmoment
- M: Moment
- ΔM_{LW-S}: Momenten-Differenz zu dem Startzeitpunkt t_{LW-S} des Lastwechsels

### Momenten-Gradienten:

- m*_{VKM}: negative Steigung (ΔM*_{VKM}/Δt*_{VKM}) der Kennlinie K*_{VKM} des Drehmomentes der Verbrennungskraftmaschine über der Zeit t in der Zeitspanne Δt*_{VKM} bei einem herkömmlichen Lastabbau
- ΔM*_{VKM}: Änderung des Momentes [Figur 1]
- Δt*_{VKM}: Zeitspanne [Figur 1]

- m_{EM}: positive Steigung (ΔM_{EM}/Δt_{EM}) der Kennlinie K_{EM} des Drehmomentes des Elektromotors über der Zeit t in der Zeitspanne Δt_{EM} im Überlagerungszeitraum Δt_{Ü} bei einem erfindungsgemäßen Lastabbau
- ΔM_{EM}: Änderung des Momentes [Figur 3]
- Δt_{EM}: Zeitspanne [Figur 3]
- m_{VKM}: negative Steigung (ΔM_{VKM}/Δt_{VKM}) der Kennlinie K_{VKM} des Drehmomentes der Verbrennungskraftmaschine über der Zeit t in der Zeitspanne Δt_{VKM} im Überlagerungszeitraum Δt_{Ü} bei einem erfindungsgemäßen Lastabbau [Figuren 2 und 4 ]
- ΔM_{VKM}: Änderung des Momentes [Figuren 2 und 4]
- Δt_{VKM}: Zeitspanne [Figuren 2 und 4]

### Zeiträume und Zeitpunkte:

- Δt_{V}: Verzögerungszeitraum (t_{LW-E} - t_{LW-S})
- t_{LW-S}: Startzeitpunkt des Lastwechsels
- t_{LW-E}: Endzeitpunkt des Lastwechsels
- Δt_{Ü}: Überlagerungszeitraum (t_{Ü-E} - t_{Ü-S})
- t_{Ü}-_{S}: Startzeitpunkt der Überlagerung
- t_{Ü-E}: Endzeitpunkt der Überlagerung
- Δt_{K}: Kompensationszeitraum (t_{LW-E} - t_{Ü-S})
- t_{Ü-S}: Startzeitpunkt der Überlagerung
- D: Deaktivierungslinie
- K: Kompensationslinie
- S: Schnittpunkt
- t: Zeit

## Patentansprüche

1. Verfahren zur verbrennungsmotorischen Abschaltung einer Verbrennungskraftmaschine eines Hybrid-Elektrofahrzeuges in einem negativen Lastwechselfall, bei dem zu einem Startzeitpunkt (t_{LW-S}) des Lastwechsels, in dem die Verbrennungskraftmaschine des Hybrid-Elektrofahrzeuges ein Drehmoment erzeugt, eine steuerungsseitige Anforderung zum Abbauen des Drehmomentes des Hybrid-Elektrofahrzeuges empfangen wird, wobei die Anforderung eine vorgegebene Kennlinie (K*_{VKM}) beinhaltet, nach der das Drehmoment des Hybrid-Elektrofahrzeuges über der Zeit (t) in einem sich an den Startzeitpunkt (t_{LW-S}) anschließenden Verzögerungszeitraum (Δt_{V}) bis spätestens zu einem Endzeitpunkt (t_{LW-E}) des negativen Lastwechsels gemäß der Kennlinie (K*_{VKM}) abgebaut wird, wobei die vorgegebene Kennlinie (K*_{VKM}) in dem Verzögerungszeitraum (Δt_{V}) durch eine den Kennlinienverlauf der vorgegebenen Kennlinie (K*_{VKM}) abbildende kompensatorische Kennlinie (K_{VKM}/K_{VKM/EM}/K_{EM}) des Hybrid-Elektrofahrzeuges nachgebildet wird, wobei das Hybrid-Elektrofahrzeug nach dieser kompensatorischen Kennlinie (K_{VKM}/K_{VKM/EM}/K_{EM}) derart betrieben wird, dass das Drehmoment der Verbrennungskraftmaschine ab einem Startzeitpunkt (t_{Ü-S}) eines zeitlich innerhalb des Verzögerungszeitraumes (Δt_{V}) liegenden Überlagerungszeitraumes (Δt_{Ü}) durch ein verfügbares Drehmoment (M_{verf}/Mₘₐₓ) eines Elektromotors in Abhängigkeit eines Momenten-Gradienten (m_{EM}), der die Änderungsgeschwindigkeit des von dem Elektromotor zur Verfügung gestellten Betrages des Drehmomentes (M_{verf}) über der Zeit (t) angibt, zumindest teilweise oder vollständig kompensiert wird, wobei das Drehmoment der Verbrennungskraftmaschine während des Überlagerungszeitraums (Δt_{Ü}) auf Null geht.

2. Verfahren nach Anspruch 1, **dadurch gekennzeichnet, dass** durch die koordinierten Steuerungsmaßnahmen vom Startzeitpunkt (t_{LW-S}) des Lastwechsels ausgehend eine vollständige verbrennungsmotorische Abschaltung der Verbrennungskraftmaschine zu einem Endzeitpunkt (t_{Ü-E}) des Überlagerungszeitraumes (Δt_{Ü}) erreicht wird, der vor dem Endzeitpunkt (t_{LW-E}) des Verzögerungszeitraumes (Δt_{V}) des negativen Lastwechsels liegt.

3. Verfahren nach Anspruch 1, **dadurch gekennzeichnet, dass** bei dem Empfangen der steuerungsseitigen Anforderung zum Abbauen des Drehmomentes des Hybrid-Elektrofahrzeuges zu dem Startzeitpunkt (t_{LW-S}) des negativen Lastwechsels das maximal verfügbare Drehmoment (Mₘₐₓ) des Elektromotors und ein maximaler Momenten-Gradient (m_{EM}) zur Verfügung steht, wobei innerhalb des Überlagerungszeitraumes (Δt_{Ü}) das maximal verfügbare Drehmoment (Mₘₐₓ) mit dem maximalen Momenten-Gradienten (m_{EM}) oder ein verfügbares Drehmoment (M_{verf}) mit einem vorgebbaren Momenten-Gradienten (m_{EM}) eingesetzt wird, um das Drehmoment der Verbrennungskraftmaschine zu kompensieren.

4. Verfahren nach den Ansprüchen 1 und 3, **dadurch gekennzeichnet, dass** der Startzeitpunkt (t_{Ü-S}) des Überlagerungszeitraumes (Δt_{Ü}) ermittelt wird, indem ein Momenten-Gradient (M*_{VKM}) der vorgegebenen Kennlinie (K*_{VKM}) im Überlagerungszeitraum (Δt_{Ü}) berechnet und zur Verfügung gestellt wird, wobei aus der Zeitspanne (Δt_{EM}) des Elektromotors und dem Momenten-Gradienten (m*_{VKM}) der vorgegebenen Kennlinie (K*_{VKM}) ein Betrag einer Deaktivierungs-Momentendifferenz (ΔM_{Ü-VKM}) nach einer Gleichung [2] ΔM_{Ü-VKM} = Δt_{EM} x m*_{VKM} berechnet wird, wonach ein Deaktivierungsmoment (M_{D-VKM}) nach einer Gleichung [3] M_{D-VKM} = M_{verf} + ΔM_{Ü-VKM} oder M_{D-VKM} = Mₘₐₓ + ΔM_{Ü-VKM} bestimmt wird, das einen Deaktivierungs-Momentenschwellenwert auf einer Deaktivierungslinie (D) bildet, wobei ein Schnittpunkt (S) zwischen dem ermittelten Deaktivierungsmoment (M_{D-VKM}) auf der Deaktivierungslinie (D) und der kompensatorischen Kennlinie (K_{VKM}/K_{VKM/EM}/K_{EM}), die der Kennlinie (K*_{VKM}) nachgebildet ist, dem Startzeitpunkt (t_{Ü-S}) des Überlagerungszeitraumes (Δt_{Ü}) zur Kompensation des Drehmomentes des Verbrennungsmotors durch den Elektromotor entspricht.

5. Verfahren nach Anspruch 4, **dadurch gekennzeichnet, dass** eine Ermittlung des Momenten-Gradienten (m_{VKM}) des Verbrennungsmotors in dem Überlagerungszeitraum Δt_{Ü} (t_{Ü-E} - t_{Ü-S}) in der Zeitspanne Δt_{EM} = Δt_{VKM} = Δt_{Ü} nach einer Gleichung [4] m_{VKM} = M_{D-VKM} / Δt_{Ü} vorgenommen wird, wobei der Momenten-Gradient (m_{VKM}) des Verbrennungsmotors ausgehend von dem Betrag (M_{D-VKM}) zu dem Startzeitpunkt (t_{Ü-S}) zeitlich an den Überlagerungszeitraum (Δt_{Ü}) angepasst wird, so dass der Betrag des Drehmomentes (M_{LW-E}) des Verbrennungsmotors zu dem Endzeitpunkt (t_{Ü-E}) der überlagerten Kompensation = 0 ist.

6. Verfahren nach den Ansprüchen 1 und 3, **dadurch gekennzeichnet, dass** der Startzeitpunkt (t_{Ü-S}) des Überlagerungszeitraumes (Δt_{Ü}) ermittelt wird, indem zunächst eine Berechnung des Endzeitpunktes (t_{Ü-E}) des Überlagerungszeitraumes (Δt_{Ü} vorgenommen wird, bei dem der Elektromotor mit seinem verfügbaren Drehmoment (M_{verf}/Mₘₐₓ) das Drehmoment des Verbrennungsmotors vollständig zu dem Endzeitpunkt (t_{Ü-E}) des Überlagerungszeitraumes (Δt_{Ü}) kompensiert, wobei zur Bestimmung eines vollständigen Kompensations-Drehmomentes eine Momenten-Differenz (ΔM_{LW-S}) zu dem Startzeitpunkt (t_{LW-S}) des negativen Lastwechsels des zu dem Startzeitpunkt (t_{LW-S}) anliegenden Drehmomentes (M_{LW-S}) des Verbrennungsmotors von dem verfügbaren Drehmoment (M_{verf}/Mₘₐₓ) des Elektromotors nach einer Gleichung [5] ΔM_{LW-S} = M_{LW-S} - M_{verf}/Mₘₐₓ abgezogen wird, wobei anschließend aus der Momenten-Differenz (ΔM_{LW-S}) und aus dem Momenten-Gradienten (M*_{VKM}) gemäß der vorgegebenen Kennlinie (K*_{VKM}) der Endzeitpunkt (t_{Ü-E}) nach einer Gleichung [6] t_{Ü-E} = (M_{LW-S} - M_{verf}/Mₘₐₓ)/M*_{VKM} des Überlagerungszeitraumes (Δt_{Ü}) bestimmt wird, wobei in Kenntnis der Zeitspanne (Δt_{EM}) und des Endzeitpunktes (t_{Ü-E}) des Überlagerungszeitraumes (Δt_{Ü}) der Startzeitpunkt (t_{Ü-S}) des Überlagerungszeitraumes (Δt_{Ü}) der kompensatorischen Kennlinie (K_{VKM}/K_{VKM/EM}/K_{EM}), die der Kennlinie (K*_{VKM}) nachgebildet ist, gemäß einer Gleichung [7] t_{Ü-S} = t_{Ü-E} - Δt_{Ü} als Differenz des Endzeitpunktes (t_{Ü-E}) und des Überlagerungszeitraumes (Δt_{Ü}) berechnet wird.

7. Verfahren nach Anspruch 6, **dadurch gekennzeichnet, dass** eine Ermittlung des Momenten-Gradienten (m_{VKM}) des Verbrennungsmotors in dem Überlagerungszeitraum (Δt_{Ü}) in der Zeitspanne Δt_{EM} = ΔT_{VKM} = Δt_{Ü} nach einer Gleichung [8] m_{VKM} = M_{VKM}/Δt_{Ü} zu dem Startzeitpunkt (t_{Ü-S}) des Überlagerungszeitraumes (Δt_{Ü}) vorgenommen wird, so dass der Betrag des Drehmomentes (M_{LW-E}) des Verbrennungsmotors zu dem Endzeitpunkt (t_{Ü-E}) der überlagerten Kompensation = 0 ist.

8. Verfahren nach Anspruch 1, **dadurch gekennzeichnet, dass** die Verbrennungskraftmaschine nach dem Empfangen der steuerungsseitigen Anforderung gemäß der kompensatorischen Kennlinie (K_{VKM}/K_{VKM/EM}/K_{EM}) durch koordinierte Steuerungsmaßnahmen, wie eine Zündwinkelverstellung und/oder Veränderung der Füllung der Zylinder mit Verbrennungsluft und/oder Kraftstoff und/oder zylinderindividuelles Abschalten der Einspritzung über Ausblendmuster einzelner Zylinder oder durch Abschalten aller Zylinder ohne Ausblendmuster, heruntergefahren wird.

9. Hybrid-Elektrofahrzeug, eingerichtet das erfindungsgemäße Verfahren nach mindestens einem der Ansprüche 1 bis 8 auszuführen, umfassend mindestens ein Motor-Steuergerät, in dem ein computerlesbarer Programmalgorithmus zur Ausführung des Verfahrens und gegebenenfalls erforderliche Kennfelder gespeichert sind.

## Claims

1. Method for a combustion-engine shutdown of an internal combustion engine of a hybrid electric vehicle in a negative load change mode in the course of which, at a start time (t_{LW-S}) of the load change in which the internal combustion engine of the hybrid electric vehicle generates a torque, a control-side request to reduce the torque of the hybrid electric vehicle is received, wherein the request contains a specified characteristic curve (K*_{VKM}) according to which the torque of the hybrid electric vehicle is reduced over time (t) in a delay period (Δtv) which adjoins the start time (t_{LW-S}) until, at the latest, an end time (t_{LW-E}) of the negative load change according to the characteristic curve (K*_{VKM}), wherein the specified characteristic curve (K*_{VKM}) is represented in the delay period (Δt_{V}) by a compensatory characteristic curve (K_{VKM}/K_{VKM/EM}/K_{EM}) of the hybrid electric vehicle that maps the characteristic curve profile of the specified characteristic curve (K*_{VKM}), wherein the hybrid electric vehicle is operated according to this compensatory characteristic curve (K_{VKM}/K_{VKM/EM}/K_{EM}) such that, from a start time (t_{Ü-S}) of a superposition period (Δt_{Ü}) taking place within the delay period (Δtv), the torque of the internal combustion engine is at least partially or completely compensated for by an available torque (M_{verf}/Mₘₐₓ) of an electric motor on the basis of a moment gradient (m_{EM}) which indicates the change speed of the amount of the torque (M_{verf}) which is provided by the electric motor over time (t), wherein the torque of the internal combustion engine goes to zero during the superposition period (Δt_{Ü}).

2. Method according to claim 1, **characterized in that,** due to the coordinated control measures starting from the start time (t_{LW-S}) of the load change, a complete combustion-engine shutdown of the internal combustion engine is reached at an end time (t_{Ü-E}) of the superposition period (Δt_{Ü}) which is before the end time (t_{LW-E}) of the delay period (Δtv) of the negative load change.

3. Method according to claim 1, **characterized in that** upon receiving the control-side request to reduce the torque of the hybrid electric vehicle at the start time (t_{LW-S}) of the negative load change, the maximum available torque (Mₘₐₓ) of the electric motor and a maximum moment gradient (m_{EM}) is available, wherein, within the superposition period (Δt_{Ü}), the maximum available torque (Mₘₐₓ) having the maximum moment gradient (m_{EM}) or an available torque (M_{verf}) having a specifiable moment gradient (m_{EM}) is used to compensate for the torque of the internal combustion engine.

4. Method according to claims 1 and 3, **characterized in that** the start time (t_{Ü-S}) of the superposition period (Δt_{Ü}) is determined **in that** a moment gradient (m*_{VKM}) of the specified characteristic curve (K*_{VKM}) in the superposition period (Δt_{Ü}) is calculated and provided, wherein an amount of a deactivation moment difference (ΔM_{Ü-VKM}) is calculated from the time span (Δt_{EM}) of the electric motor and the moment gradient (m*_{VKM}) of the specified characteristic curve (K*_{VKM}) according to equation [2] ΔM_{Ü-VKM} = Δt_{EM} *x* m*_{VKM}, according to which a deactivation moment (M_{D-VKM}) is defined according to equation [3] M_{D-VKM} = M_{verf} + ΔM_{Ü-VKM} or M_{D-VKM} = Mₘₐₓ + ΔM_{Ü-VKM}, which deactivation moment forms a deactivation moment threshold on a deactivation line (D), wherein an intersection point (S) between the determined deactivation moment (M_{D-VKM}) on the deactivation line (D) and the compensatory characteristic curve (K_{VKM}/K_{VKM/EM}/K_{EM}) which represents the characteristic curve (K*_{VKM}) corresponds to the start time (t_{Ü-S}) of the superposition period (Δ t_{Ü}) for compensating for the torque of the combustion engine by the electric motor.

5. Method according to claim 4, **characterized in that** the moment gradient (m_{VKM}) of the combustion engine in the superposition period Δt_{Ü}(t_{Ü-E}-t_{Ü-S}) in the time span Δt_{EM} = Δt_{VKM} = Δt_{Ü} is determined according to equation [4] m_{VKM} = M_{D-VKM} /Δt_{Ü}, wherein the moment gradient (m_{VKM}) of the combustion engine, starting from the amount (M_{D-VKM}) at the start time (t_{Ü-S}), is temporally adapted to the superposition period (Δt_{Ü}) so that the amount of the torque (M_{LW-E}) of the combustion engine is = 0 at the end time (t_{Ü-E}) of the superposed compensation.

6. Method according to claims 1 and 3, **characterized in that** the start time (t_{Ü-S}) of the superposition period (Δt_{Ü}) is determined **in that** initially the end time (t_{Ü-E}) of the superposition period (Δt_{Ü}) is calculated, at which the electric motor with its available torque (M_{verf}/Mₘₐₓ) fully compensates for the torque of the combustion engine at the end time (t_{Ü-E}) of the superposition period (Δt_{Ü}), wherein, to define a complete compensation torque, a moment difference (ΔM_{LW-S}) is deducted from the available torque (M_{verf}/Mₘₐₓ) of the electric motor according to equation [5] ΔM_{LW-S} = M_{LW-S} - M_{verf}/Mₘₐₓ at the start time (t_{LW-S}) of the negative load change of the torque (M_{LW-S}) of the combustion engine which applies at the start time (t_{LW-S}), wherein the end time (t_{Ü-E}) according to equation [6] t_{Ü-E} = (M_{LW-S} - M_{verf}/Mₘₐₓ)/m*_{VKM} of the superposition period (Δtu) is subsequently defined from the moment difference (ΔM_{LW-S}) and from the moment gradient (m*_{VKM}) according to the specified characteristic curve (K*_{VKM}), wherein, knowing the time span (Δt_{EM}) and the end time (t_{Ü-E}) of the superposition period (Δt_{Ü}), the start time (t_{Ü-S}) of the superposition period (Δt_{Ü}) of the compensatory characteristic curve (K_{VKM}/K_{VKM/EM}/K_{EM}) which represents the characteristic curve (K*_{VKM}) is calculated according to equation [7] t_{Ü-S} = t_{Ü-E} - Δt_{Ü} as a difference of the end time (t_{Ü-E}) and of the superposition period (t_{Ü}).

7. Method according to claim 6, **characterized in that** the moment gradient (m_{VKM}) of the combustion engine in the superposition period (Δt_{Ü}) in the time span Δt_{EM} = ΔT_{VKM} = Δt_{Ü} is determined according to equation [8] m_{VKM} = M_{VKM}/Δt_{Ü} at the start time (t_{Ü-S}) of the superposition period (Δt_{Ü}) so that the amount of the torque (M_{LW-E}) of the combustion engine is = 0 at the end time (t_{Ü-E}) of the superposed compensation.

8. Method according to claim 1, **characterized in that,** after receiving the control-side request according to the compensatory characteristic curve (K_{VKM}/K_{VKM/EM}/K_{EM}), the internal combustion engine is shut down by coordinated control measures, such as ignition timing and/or a change in filling the cylinder with combustion air and/or fuel and/or cylinder-individual switch-off of the injection via shutting-off patterns of individual cylinders or by switching off all cylinders without shutting-off patterns.

9. Hybrid electric vehicle, which is designed to execute the method according to the invention according to at least one of claims 1 to 8 and comprises at least one motor control unit in which a computer-readable program algorithm for executing the method and optionally required characteristic maps are stored.

## Revendications

1. Procédé pour l'arrêt de moteur thermique du moteur à combustion interne d'un véhicule hybride en cas de changement de charge négatif dans lequel, à un instant de début (t_{LW-S}) du changement de charge au cours duquel le moteur à combustion interne du véhicule hybride génère un couple de rotation, une demande côté dispositif de commande est reçue pour la réduction du couple de rotation du véhicule hybride, dans lequel la demande contient une courbe caractéristique (K*_{VKM}) prédéfinie selon laquelle le couple de rotation du véhicule hybride est réduit en fonction du temps (t) au cours d'une période de décélération (Δtv) ultérieure à l'instant de début (t_{LW-S}) jusqu'à, au plus tard, un instant de fin (t_{LW-E}) du changement de charge négatif, conformément à la courbe caractéristique (K*_{VKM}), dans lequel la courbe caractéristique (K*_{VKM}) prédéfinie est reproduite, au cours de la période de décélération (Δt_{V}), par une courbe caractéristique compensatoire (K_{VKM}/K_{VKM/EM}/K_{EM}) du véhicule hybride représentant l'évolution de courbe caractéristique de la courbe caractéristique (K*_{VKM}) prédéfinie, dans lequel le véhicule hybride fonctionne selon ladite courbe caractéristique compensatoire (K_{VKM}/K_{VKM/EM}/K_{EM}) de telle sorte que le couple de rotation du moteur à combustion interne, à partir d'un instant de début (tü-s) d'une période de superposition (Δt_{Ü}) située temporellement dans la période de décélération (Δt_{V}), est compensé au moins partiellement ou complètement par un couple de rotation (M_{verf}/Mₘₐₓ) disponible d'un moteur électrique en fonction d'un gradient de couple (m_{EM}) qui indique la vitesse de variation de la valeur du couple de rotation (M_{verf}) mis à disposition par le moteur électrique en fonction du temps (t), dans lequel le couple de rotation du moteur à combustion interne atteint zéro pendant la période de superposition (Δt_{Ü}).

2. Procédé selon la revendication 1, **caractérisé en ce que,** par les mesures de commande coordonnées, à partir de l'instant de début (_{tLW-S}) du changement de charge, un arrêt de moteur thermique complet du moteur à combustion interne est atteint à un instant de fin (t_{Ü-E}) de la période de superposition (Δt_{Ü}) qui précède l'instant de fin (t_{LW-E}) de la période de décélération (Δtv) du changement de charge négatif.

3. Procédé selon la revendication 1, **caractérisé en ce que,** lors de la réception de la demande côté dispositif de commande pour la réduction du couple de rotation du véhicule hybride à l'instant de début (t_{LW-S}) du changement de charge négatif, le couple de rotation maximal disponible (Mₘₐₓ) du moteur électrique et un gradient de couple (m_{EM}) maximal sont disponibles, dans lequel, dans la période de superposition (Δt_{Ü}), le couple de rotation maximal disponible (Mₘₐₓ) est utilisé avec le gradient de couple (m_{EM}) maximal ou un couple de rotation (M_{verf}) disponible est utilisé avec un gradient de couple (m_{EM}) pouvant être prédéfini afin de compenser le couple de rotation du moteur à combustion interne.

4. Procédé selon les revendications 1 et 3, **caractérisé en ce que** l'instant de début (tü-s) de la période de superposition (Δt_{Ü}) est déterminé par le fait qu'un gradient de couple (m*_{VKM}) de la courbe caractéristique (K*_{VKM}) prédéfinie au cours de la période de superposition (Δt_{Ü}) est calculé et mis à disposition, dans lequel une valeur d'une différence de couple de désactivation (ΔM_{Ü-VKM}) est calculée à partir de l'intervalle de temps (Δt_{EM}) du moteur électrique et du gradient de couple (m*_{VKM}) de la courbe caractéristique (K*_{VKM}) prédéfinie, selon une équation [2] ΔM_{Ü-VKM} = Δt_{EM} *x* m*_{VKM}, moyennant quoi un couple de désactivation (M_{D-VKM}) est établi selon une équation [3] M_{D-VKM} = M_{verf} + ΔM_{Ü-VKM} ou M_{D-VKM} = Mₘₐₓ + ΔM_{Ü-VKM} qui constitue une valeur seuil de couple de désactivation sur une ligne de désactivation (D), dans lequel un point d'intersection (S) entre le couple de désactivation (M_{D-VKM}) déterminé sur la ligne de désactivation (D) et la courbe caractéristique compensatoire (K_{VKM}/K_{VKM/EM}/K_{EM}), qui reproduit la courbe caractéristique (K*_{VKM}), correspond à l'instant de début (tü-s) de la période de superposition (Δt_{Ü}) pour la compensation du couple de rotation du moteur à combustion interne par le moteur électrique.

5. Procédé selon la revendication 4, **caractérisé en ce qu'**une détermination du gradient de couple (m_{VKM}) du moteur à combustion interne est effectuée au cours de la période de superposition Δt_{Ü} (t_{Ü-E}-t_{Ü-S}) au cours de l'intervalle de temps Δt_{EM} = ΔT_{VKM} = Δt_{Ü} selon une équation [4] m_{VKM} = M_{D-VKM} / Δt_{Ü}, dans lequel le gradient de couple (m_{VKM}) du moteur à combustion interne est ajusté temporellement à partir de la valeur (M_{D-VKM}) jusqu'à l'instant de début (tü-s) en fonction de la période de superposition (Δt_{Ü}), de sorte que la valeur du couple de rotation (M_{LW-E}) du moteur à combustion interne à l'instant de fin (t_{Ü-E}) de la compensation superposée est égale à zéro.

6. Procédé selon les revendications 1 et 3, **caractérisé en ce que** l'instant de début (tü-s) de la période de superposition (Δt_{Ü}) est déterminé par le fait qu'un calcul de l'instant de fin (t_{Ü-E}) de la période de superposition (Δt_{Ü}) est d'abord effectué, dans lequel le moteur électrique, avec son couple de rotation (M_{verf}/Mₘₐₓ) disponible, compense complètement le couple de rotation du moteur à combustion interne jusqu'à l'instant de fin (t_{Ü-E}) de la période de superposition (Δt_{Ü}), dans lequel, pour l'établissement d'un couple de rotation de compensation complet, une différence de couple (ΔM_{LW-S}) par rapport à l'instant de début (t_{LW-S}) du changement de charge négatif du couple de rotation (M_{LW-S}) du moteur à combustion interne présent à l'instant de début (t_{LW-S}) est déduite du couple de rotation (M_{verf}/Mₘₐₓ) disponible du moteur électrique selon une équation [5] ΔM_{LW-S} = M_{LW-S} - M_{verf}/Mₘₐₓ, dans lequel l'instant de fin (t_{Ü-E}) est ensuite établi à partir de la différence de couple (ΔM_{LW-S}) et du gradient de couple (m*_{VKM}) conformément à la courbe caractéristique (K*_{VKM}) prédéfinie selon une équation [6] t_{Ü-E} = (M_{LW-S} - M_{verf}/Mₘₐₓ) / m*_{VKM} de la période de superposition (Δt_{Ü}), dans lequel, étant donné l'intervalle de temps (Δt_{EM}) et l'instant de fin (t_{Ü-E}) de la période de superposition (Δt_{Ü}), l'instant de début (tü-s) de la période de superposition (Δt_{Ü}) de la courbe caractéristique compensatoire (K_{VKM}/K_{VKM/EM}/K_{EM}), qui reproduit la courbe caractéristique (K*_{VKM}), est calculé selon une équation [7] t_{Ü-S} = t_{Ü-E} - Δt_{Ü} en tant que différence entre l'instant de fin (t_{Ü-E}) et la période de superposition (t_{Ü}).

7. Procédé selon la revendication 6, **caractérisé en ce qu'**une détermination du gradient de couple (m_{VKM}) du moteur à combustion interne est effectuée au cours de la période de superposition (Δt_{Ü}) au cours de l'intervalle de temps Δt_{EM} = Δt_{VKM} = Δt_{Ü} selon une équation [8] m_{VKM} = M_{VKM} / Δt_{Ü} à l'instant de début (tü-s) de la période de superposition (Δt_{Ü}), de sorte que la valeur du couple de rotation (M_{LW-E}) du moteur à combustion interne à l'instant de fin (t_{Ü-E}) de la compensation superposée est égale à zéro.

8. Procédé selon la revendication 1, **caractérisé en ce que,** après la réception de la demande côté dispositif de commande, conformément à la courbe caractéristique compensatoire (K_{VKM}/K_{VKM/EM}/K_{EM}), le moteur à combustion interne est éteint par des mesures de commande coordonnées, telles que réglage d'angle d'allumage et/ou modification du remplissage des cylindres en air de combustion et/ou en carburant et/ou arrêt individuel côté cylindres de l'injection en fonction d'un schéma de désactivation de cylindres individuels ou par l'arrêt de tous les cylindres sans schéma de désactivation.

9. Véhicule hybride, configuré pour mettre en œuvre le procédé selon l'invention selon au moins l'une des revendications 1 à 8, comprenant au moins un appareil de commande de moteur dans lequel sont stockés un algorithme de programme lisible par ordinateur permettant la mise en œuvre du procédé et, éventuellement, des diagrammes caractéristiques nécessaires.
